# EUROPEAN PATENT APPLICATION

(11) **EP 4 206 628 A1**
(43) Date of publication of application: **05.07.2023**
(21) Application number: 21218164.8
(22) Date of filing: 29.12.2021
(51) Int. Cl.: G01J 3/02, G01J 3/50, G02B 19/00

(54) **COLOR MEASUREMENT DEVICE HAVING A COMPACT OPTICAL SYSTEM**

(71) Applicant: X-Rite Europe GmbH, 8105 Regensdorf (CH)
(72) Inventor: Kaldewey, Timo, CH-8105 Regensdorf (CH); Ehbets, Peter, CH-8105 Regensdorf (CH)
(74) Representative: Jonas, Hans-Hermann

(57) **Abstract**

A color measurement device for determining color characteristics of a measurement area (300) is disclosed, comprising a light detector (200) and an optical system (100) for guiding light from the measurement area to the light detector. The optical system (100) defines a system axis (S) that passes through a detection area (210) of the light detector (200). The optical system comprises a first reflective surface (110) that causes incident light rays (Rᵢₙ) that have entered the optical system parallel to the system axis (S) to be reflected into once-reflected light rays (R₁) having a first direction of reflection towards the system axis (S). The optical system further comprises a second reflective surface (120) that causes the once-reflected light rays to be reflected into twice-reflected light rays (R₂). The twice-reflected light rays are propagated to the light detector. Advantageously, the optical system comprises an optical body (101) made of a transparent material, wherein the reflective surfaces are formed by surface portions of the optical body, internal reflection taking place at these surface portions.

## Description

### TECHNICAL FIELD

The present invention relates to a color measurement device whose optical system has a particularly compact design.

### PRIOR ART

Color measurement is an important task in color management applications. One important field of color measurement is the calibration of a display. The goal is to accurately reproduce the colors on the display according to external references, for example to match the colors on the display to the colors of a printed document.

A known color measurement device for displays is the product i1 Display Pro manufactured by X-Rite Inc. The device comprises an optical detector having multiple pixels equipped with color filters and a refractive collimation lens system designed to pick up only a narrow angular range of the light emitted from the display surface perpendicular to the surface of the display. Due to the presence of the lens system, the device requires considerable height perpendicular to the display surface.

It may be desirable to integrate a color measurement device directly with a display or with a computing device. One particular application is the integration of the color measurement sensor into a laptop computer. For instance, the color measurement device may be arranged in the housing of the laptop computer next to the keyboard. The display of the laptop computer can then be measured in its closed position where it is faces the color measurement device. Another application is the integration with a desktop computer monitor, where it may be desirable to permanently mount a color measurement device on a frame of the monitor.

For these and other applications, the color measurement device should be as compact as possible. In particular, it is desirable to provide a color measurement device whose height along a direction perpendicular to the display surface is as small as possible. For instance, the height should preferably not exceed 4 mm or even 2 mm.

Additional design constraints for the color measurement device may be imposed by the measurement geometry and by established standards for display calibration measurements. On the one hand, the measurement area needs to be sufficiently large to enable averaging of the emissions from a sufficiently large number of pixels on the display. According to established standards, the diameter of the measurement area should typically be at least 4 mm for an HD display. On the other hand, the maximum acceptance angle of the color measurement device should typically not be larger than 2.5° (cf. ISO 12646:2015, Clause 5.4.1 b) and ISO 13655:2017, Clause 4.4.2.1).

These requirements cannot all be met simultaneously with a conventional design that employs a refractive collimation lens system

### SUMMARY OF THE INVENTION

It is an object of the present invention to provide a color measurement device having reduced mechanical height in a direction perpendicular to a measurement area to be measured while providing a comparatively large measurement area and enabling good control over the angular range of incident light that is accepted by the color measurement device.

This object is achieved by a color measurement device according to claim 1. Further embodiments of the invention are laid down in the dependent claims.

Accordingly, the present invention provides a color measurement device for determining color characteristics of a measurement area, the color measurement device comprising:
a spectrally selective light detector defining a detection area; and
an optical system for guiding light that has been emitted from the measurement area to the detection area, the optical system defining a system axis, the system axis passing through the detection area, the optical system comprising:
   a first reflective surface configured to cause incident light rays that have entered the optical system along an incident direction parallel to the system axis to be reflected into once-reflected light rays having a first direction of reflection, the first direction of reflection having a component that is directed radially inwards towards the system axis, the first reflective surface being inclined relative to a plane perpendicular to the system axis and shaped like at least a portion of an axially symmetric surface having rotational circular symmetry with respect to the system axis; and
   a second reflective surface configured to cause said once-reflected light rays to be reflected into twice-reflected light rays,

By reflecting incident light rays at the inclined first reflective surface and reflecting the once-reflected light rays at the second reflective surface, the optical path is folded. This enables a considerable reduction in height. By shaping the first reflective surface like a portion of an axially symmetric surface (i.e., of a surface having rotational circular symmetry in three-dimensional space) or making the entire first reflective surface axially symmetric, light rays that originate from different azimuthal positions about the system axis are all reflected inwards towards the system axis. The once-reflected rays from different azimuthal directions are collected at the second reflective surface and reflected into a second direction of reflection. These twice-reflected light rays are then propagated to the light detector. In particular, the light detector may be arranged to receive the twice-reflected light rays without further reflections, or the device may comprise one or more further reflective surfaces at which the twice-reflected light rays are further reflected before they reach the light detector. In this manner, incident light from a comparatively large measurement area can be collected by the optical system. By choosing suitable sizes of the first and second reflective surfaces and/or by creating apertures that limit the passage of light rays to these reflective surfaces, and possibly also by tailoring the reflection characteristics of the reflective surfaces, the acceptance angle of the optical system can be readily controlled. In summary, the resulting color measurement device can be designed with very small mechanical height while having a large measurement area and providing good control of the acceptance angle. The optical system can be manufactured at low cost using only very few parts, which may be plastic parts formed by simple processes like injection molding.

The color measurement device may be configured to measure colors generated by a display device, i.e., the measurement area may be a surface portion of a display device. The display device may be, e.g., a display of a laptop computer, a monitor for a desktop computer, a display of a mobile device such as a mobile phone or a tablet computer, a screen illuminated by a projector, or a TV screen. The color measurement device may be integrated with the display device or with a computing device that comprises the display device, or it may be a separate device. However, application of the present invention is not restricted to measuring colors generated by a display device, and more generally, the measurement area may be a portion of an arbitrary surface that is illuminated by a light source, e.g., from a projector, or that itself generates light.

The range of azimuthal angles about the system axis over which the first reflective surface extends is preferably a full 360° range. More specifically, the first reflective surface is preferably itself axially symmetric and may be shaped like a full ring about the system axis when viewed in a projection along the system axis. In this manner, the first reflective surface is able to receive light rays from a full 360° range of azimuthal positions about the system axis, and the measurement area can thus be maximized. In other embodiments, the range of azimuthal angles over which the first reflective surface extends may be less than 360°. For instance, the first reflective surface may be shaped like a ring segment about the system axis when viewed in a projection along the system axis, whereby the first reflective surface is able to receive light rays from less than a full 360° range of azimuthal positions about the system axis. Accordingly, the optical system as a whole may be configured to accept light that has been emitted from a measurement area that is shaped like a full ring or like a ring segment.

A section of the first reflective surface with a sectional plane that contains the system axis may be a straight line, or it may be curved to cause focusing of parallel incident light rays towards the light detector. Specifically, the first reflective surface may be shaped like a portion of a lateral surface of a right circular first cone having a first cone axis that coincides with the system axis.

The second reflective surface may be flat and extend in a plane perpendicular to the system axis, or it may also be inclined relative to a plane perpendicular to the system axis and shaped like at least a portion of an axially symmetric surface having rotational circular symmetry with respect to the system axis. The range of azimuthal angles over which the second reflective surface extends is preferably the same as the range over which the first reflective surface extends. Similarly to the first reflective surface, a section of the first reflective surface with a sectional plane that contains the system axis may be a straight line, or it may be curved. In some embodiments, the second reflective surface may be shaped like a portion of a lateral surface of a right circular second cone having a second cone axis that coincides with the system axis.

The optical system of the present invention generally transmits light that has been emitted from the measurement surface in a certain range of emission angles. The presently proposed design of the optical system ensures that light that has been emitted at each emission angle in this range is distributed over a substantial portion of the detection area. For instance, if the detector comprises several pixels with color filters, this ensures that each pixel receives light that has been emitted at many different emission angles within the range of emission angles that are transmitted by the optical system.

To further improve angular mixing, the optical system of the color measurement device may further comprise a diffusor arranged in front of the detection area of the light detector in order to diffuse the light that is propagated to the light detector before the light impinges onto the detection area. Such a diffusor may not only improve angular mixing, but it may in addition also induce polarization mixing, i.e., it may transform linearly polarized light into a mixture of light in different polarization states. This is advantageous since most displays generate polarized light, while the light detector may have a sensitivity that depends on the polarization state of the received light. Since the polarization state of the display and/or the polarization dependence of the detector's sensitivity may be unknown, polarization mixing is desirable so as to reduce sensitivity of the color measurement on the orientation of the color measurement device on the display surface.

In addition or in the alternative, the light detector may comprise an array of pixels, each pixel receiving light emitted at a different range of emission angles, and signals from different pixels may be averaged, so as to additionally improve angular mixing.

In advantageous embodiments, the optical system not only transports light from the measurement area to the detector, but also focuses the light, i.e., it causes parallel incident light rays to converge towards the light detector. Specifically, the optical system, as a whole, may define a focal plane. The focal plane may coincide with a plane in which the stop aperture of the optical system is located. The stop aperture of the optical system is advantageously defined by a mechanical aperture. If the optical system comprises a diffusor, the diffusor may advantageously be placed immediately after or in front of the stop aperture. The stop aperture may be formed by an opening in a front surface of a package of the light detector. The light detector package advantageously defines a certain axial distance between the stop aperture and the plane in which the detection area is arranged in to allow for the mixing of light that emanates from different portions of the diffusor. Focusing may be achieved by different means. In some embodiments, the optical system may comprise an entrance lens and/or an exit lens for focusing the light when the light enters and/or exits the optical system. In other embodiments, at least one of the first and second reflective surface may be curved in such a manner that a section of the first reflective surface with a sectional plane that contains the system axis is curved, as outlined above. These means for focusing may also be combined.

In some embodiments, the optical system may comprise or consist of one or more mirror elements having mirror surfaces that form the first and second reflective surfaces, the mirror surfaces being configured to cause external reflections. In other words, in such embodiments the light rays propagate through free space (i.e., through the air) and are reflected at external mirror surfaces of the mirror elements ("front-surface mirrors"). The mirror elements may be held in a mounting system and may be aligned to the mounting system by alignment features like protrusions and notches. Each mirror element may be a single injection-molded plastics element to which mirror coatings have been applied to form the first and second reflective surfaces, respectively.

In other embodiments, the optical system may comprise or consist of an optical body made of a transparent material, wherein the first and second reflective surfaces are formed by first and second surface portions of the optical body, respectively, wherein the first reflective surface is configured to cause reflection of the incident light rays by internal reflection, and wherein the second reflective surface is configured to cause reflection of the once-reflected light rays by internal reflection as well. The optical body may comprise back-surface mirror coatings on the respective surface portions of the optical body to cause the internal reflections, or the optical body may be configured to cause total internal reflection at one or both of these surface portions, whereby no mirror coating is required. The optical body may be produced as a single element in one piece, or it may be assembled from two or more components, preferably using alignment features like protrusions and notches to ensure proper alignment. Such an optical body can be produced at very low cost by injection molding. If the light rays are reflected by total internal reflection, no mirror coatings are needed on the optical body, which further simplifies manufacture and reduces costs.

By integrating the first and second reflective surfaces into a single optical body made in one piece, the relative positions of these surfaces are very well defined and stable. No alignment of separate elements having the first and second reflective surfaces is required during assembly of the color measurement device.

An additional advantage of total internal reflection at the first and/or second reflective surfaces is the fact that total internal reflection causes resulting polarization mixing, i.e., linearly polarized light is transformed into light that is a mixture of different polarization states. In advantageous embodiments, a diffusor may thus be omitted.

To ensure that total internal reflection takes place at the first and second reflective surfaces, the first and second reflective surfaces may be configured as follows: The first reflective surface may be shaped like a portion of a lateral surface of a right circular first cone having a first cone axis that coincides with the system axis. The first reflective surface may have first surface normals that are inclined to the system axis by a constant first inclination angle. Likewise, the second reflective surface may be shaped like a portion of a lateral surface of a right circular second cone having a second cone axis that coincides with the system axis, and the second reflective surface may have second surface normals that are inclined to the first direction of reflection by a constant second inclination angle. Each of the first and second inclination angles is then advantageously larger than a critical angle of total internal reflection between the optical body and air, in particular, in at least a portion of the visible wavelength range, i.e., of the wavelength range between 380 nm and 700 nm.

In advantageous embodiments, the first and second reflective surfaces are parallel, i.e., sections of the first and second reflective surfaces with a sectional plane that contains the system axis result in straight, parallel line segments. This ensures that incident rays that are parallel to the system axis are reflected by the first and second reflective surfaces into twice-reflected rays that are again parallel to the system axis. This configuration of the first and second reflective surfaces is particularly advantageous if reflection at the first and second reflective surfaces is caused by total internal reflection: Parallel reflective surfaces ensure that the angle of incidence of the incident rays onto the first reflective surface is the same as the angle of incidence of the once-reflected rays onto the second reflective surface, and that therefore rays that have been reflected at the first reflective surface by total internal reflection will also experience total internal reflection at the second reflective surface.

The optical body will generally further have an entrance surface for allowing the incident rays to enter the optical body. The entrance surface may advantageously be shaped like a ring or ring segment when viewed in a projection along the system axis, thus allowing light from a correspondingly shaped measurement area to be received by the optical body. The optical body will generally also have an exit surface for allowing the twice-reflected rays to exit the optical body and to impinge onto the detection area of the light detector. Advantageously, the exit surface faces away from the entrance surface, and the system axis intersects the exit surface. The entrance surface will generally have substantially larger surface area than the exit surface, in particular, by a factor of at least 10, preferably at least 20.

In order to achieve focusing, as discussed above, the entrance surface may have positive optical lens power in such a manner that the entrance surface acts as a converging entrance lens for the incident rays, and/or the exit surface may be have positive optical lens power in such a manner that the exit surface acts as a converging exit lens for the twice-reflected rays. In this manner, the optical body achieves a focusing effect even if the first and second reflective surfaces are straight in a section with a sectional plane that contains the system axis. Positive optical lens power may be obtained, in particular, by making the entrance and/or exit surfaces convexly curved or by configuring these surfaces like a Fresnel lens.

In advantageous embodiments, the optical body has a recess that is partly delimited by the exit surface, the recess being formed in a portion of the optical body that faces away from the entrance surface. The light detector may then be received in the recess. Preferably the light detector is essentially completely received in the recess, i.e., the light detector does not project from the recess along the system axis by more than 20% of the thickness of the light detector, preferably no more than 10% of said thickness, and more preferably the light detector does not project from the recess at all. This configuration minimizes the required height of the color measurement device.

The optical body may further have a front surface arranged radially between the entrance surface and the system axis and facing substantially in the same direction as the entrance surface. The front surface is advantageously blackened or covered by a protective cap (see below) so as to prevent light from entering the optical body through the front surface. It may be advantageous if the front surface comprises at least one inclined surface portion, the at least one inclined surface portion being inclined relative to a plane that is perpendicular to the system axis. In this manner, reflections of stray light from the front surface onto the light detector may be reduced. In practice, calculations have shown that the at least one inclined portion preferably is inclined by 1° to 10° relative to the plane that is perpendicular to the center axis of the optical body, the direction into which the at least one inclined portion is inclined being directed radially outward. In order to minimize the increase of height of the optical body that may result from the inclination, multiple concentric ring-shaped or ring-segment-shaped inclined surface portions may be present, which are axially staggered in a manner similar to a Fresnel lens.

The color measurement device may further comprise a protective cap, the protective cap covering the front surface to protect the front surface from dirt and to prevent light from entering the optical body through the front surface. Advantageously, the protective cap also covers the second reflective surface, with an air gap being present between the protective cap and the second reflective surface to ensure that total internal reflection can occur at the second reflective surface.

The present invention also provides an optical body as described above by itself, independently of a light detector. In particular, the invention provides an optical body made of a transparent material, the optical body defining a system axis, the optical body comprising:
an entrance surface for allowing light to enter the optical body;
an exit surface facing away from the entrance surface and being intersected by the system axis;
a first reflective surface configured to cause incident light rays that have entered the optical body through the entrance surface along an incident direction parallel to the system axis to be internally reflected into once-reflected light rays having a first direction of reflection, the first direction of reflection having a component that is directed radially inwards towards the system axis; and
a second reflective surface configured to cause said once-reflected light rays to be internally reflected into twice-reflected light rays,
wherein the first reflective surface is inclined relative to a plane perpendicular to the system axis and shaped like at least a portion of an axially symmetric surface having rotational circular symmetry with respect to the system axis.

The thus-defined optical body may independently have any of the additional optional properties that have been discussed above as properties of an optical body that is part of a color measurement device together with a light detector.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows, in a central longitudinal sectional view in plane A-A of Fig. 2, a color measurement device according to a first embodiment;
- Fig. 2: shows the color measurement device of Fig. 1 in a schematic top view;
- Fig. 3: shows, in a central longitudinal sectional view, a color measurement device according to a second embodiment;
- Fig. 4: shows, for comparative purposes, an illustration of an optical system comprising two refractive optical elements, this system not being in accordance with the present invention;
- Fig. 5: shows, in a central longitudinal sectional view, an optical body for use in a color measurement device according to a third embodiment;
- Fig. 6: shows a schematic illustration of certain aspects of the optical path in an optical body of the type illustrated in Figs. 3 and 5; and
- Fig. 7: shows, in a central longitudinal sectional view and in a highly schematic manner, a color measurement device according to a fourth embodiment.

### DESCRIPTION OF PREFERRED EMBODIMENTS

### Definitions

*Reflective surface*: In the context of the present disclosure, any surface that is able to cause reflections of light rays is called a "reflective surface". For instance, a reflective surface may be a surface of a mirror element at which external reflection occurs ("front-surface mirror"), or it may be an internal surface of a transparent element at which internal reflection occurs ("back-surface mirror").

*(Total) internal reflection*: The term "total internal reflection" (TIR) is to be understood in the usual manner as relating to an optical phenomenon in which light waves traveling in a first medium are incident at a sufficiently oblique angle against the interface with a second medium having a lower refractive index such that the light waves are not refracted into the second ("external") medium, but completely reflected back into the first ("internal") medium. The term "internal reflection" as used in the present disclosure encompasses TIR, but also encompasses situations in which reflection at the boundary of a transparent element to a medium with lower refractive index is caused by other phenomena than TIR, e.g., by a mirror coating on a surface of the transparent element.

*Critical angle*: The term "critical angle" is to be understood in the usual manner as designating the smallest angle of incidence that yields total reflection, the angle of incidence being defined as the angle between a ray incident on a surface and the surface normal. Since the refractive index is generally wavelength-dependent, the critical angle is generally wavelength-dependent as well. However, for practical purposes, the critical angle may be assumed to be essentially constant over the visible part of the spectrum.

*Axicon*: In the field of optics, the term "axicon" is understood to relate to a specialized type of optical element that is able to transform a collimated incident beam into a ring-shaped far-field intensity distribution whose diameter is proportional to the axial distance from the axicon. To this end, an axicon typically has a conical surface at which light is refracted.

*Acceptance angle*: In the context of the present disclosure, the term "acceptance angle" of an optical system defining a system axis designates the largest angle between incident rays that are about to enter the optical system and the system axis for which the rays will be transmitted through the optical system.

### First embodiment

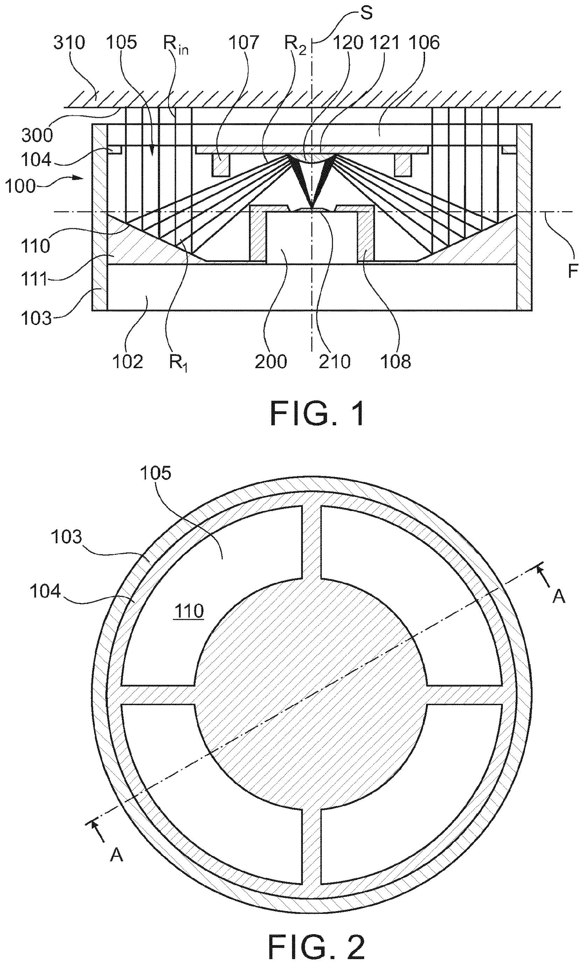

Figures 1 and 2 illustrate a first embodiment of a color measurement device. The color measurement device comprises a light detector 200 and an optical system 100 for guiding light that is received from a measurement area 300 on a display device 310 to the light detector 200.

The light detector 200 is a spectrally selective detector which is able to discern different colors, i.e., it is able to produce output signals that reflect intensities for at least three different spectral bands of the visible spectrum. In preferred embodiments, the light detector 200 comprises a sensor having a plurality of pixels covered with color filters that allow different spectral bands of the visible spectrum to pass while substantially blocking other spectral bands, thereby enabling spectral (i.e., color) resolution. Such embodiments are advantageous in that the light detector 200 can be made very flat, requiring very little height. Suitable light detectors are readily available commercially. The light detector 200 has an entrance aperture that laterally defines a detection area 210 of the light detector 200. A diffusor may be mounted in or above the entrance aperture.

The optical system 100 defines a central system axis S. The optical system 100 is essentially axially symmetric about the system axis S. The system axis S passes through the detection area 210 of the light detector 200.

The optical system 100 comprises a first reflective surface 110, which is inclined relative to a plane perpendicular to the system axis S and axially symmetric about the system axis S. In the present embodiment, the first reflective surface 110 is formed by an external mirror surface of a first mirror element 111. The first reflective surface 110 is curved in a section with the viewing plane (which is an example of a plane that contains the system axis S) to achieve a focusing effect. In a projection along the system axis S onto a plane orthogonal to S, the first reflective surface is ring-shaped. Conceptually, the first reflective surface 110 may therefore be regarded as an annular surface portion of a concave mirror, for instance, of a spherical or aspherical concave mirror. Incident light rays Rᵢₙ that have entered the optical system 100 along an incident direction parallel to the system axis S are externally reflected at the first reflective surface 110 into once-reflected light rays R₁ having a first direction of reflection directed radially inwards towards the system axis S.

The optical system 100 further comprises a second reflective surface 120, which is also inclined relative to a plane perpendicular to the system axis S and axially symmetric about the system axis S. In the present embodiment, the second reflective surface 120 is formed by an external mirror surface of a second mirror element 121. The second reflective surface 120 is dome-shaped and curved to form a convex mirror. The once-reflected light rays R₁ are externally reflected at the second reflective surface into twice-reflected light rays R₂ having a second direction of reflection directed towards the light detector 200. The second direction of reflection has a component that is parallel to the system axis S.

In this embodiment, both the first and second reflective surfaces 110, 120 are external mirror surfaces of mirror elements 111, 121, i.e., the mirror elements are front surface mirrors. The mirror elements may be produced by injection molding, and mirror coatings may be applied to produce the external mirror surfaces.

The mirror elements 111, 121 are mechanically connected to the light detector 200 as follows. The light detector 200 and the first mirror element 111 are mounted on a base plate 102 in the form of a PCB. The base plate 102 is laterally held in a cylindrical holding ring 103, which radially surrounds the base plate 102 and the first mirror element 111. An aperture plate 104 is inserted into the holding ring 103 above the first mirror element 111.

The aperture plate 104 defines an annular first aperture 105 between an outer ring portion of the aperture plate and a central cover portion thereof, said first aperture being interrupted by arms (see Fig. 2) that connect the central cover portion to the outer ring portion. The aperture plate 104 carries the second mirror element 121. The base plate 102, the holding ring 103 and the aperture plate 104 thus together form a holding system for the mirror elements 111, 121 and for the light detector 200. A flat cover glass 106 covers the aperture plate 104.

The annular first aperture 105 defines an annular measurement area 300, allowing incident light rays Rᵢₙ from the annular measurement area 300 to reach the first reflective surface 110. A beam-limiting ring 107 extends axially inwards from the central cover portion of the aperture plate 104 towards the light detector 200, and a beam-limiting detector housing 108 is arranged around the light detector 200. These beam-limiting elements together delimit a conical, annular second aperture through which once-reflected rays R₁ are able to reach the second reflective surface 120. By selecting appropriate positions and sizes of the first aperture 105 in the aperture plate 104 and of the second aperture between the beam-limiting elements 106 and 107, a narrow range of incident angles relative to the system axis S can be readily defined for which incident light rays Rᵢₙ will reach the detection area 210. Light rays that are incident at angles outside this range will either fail to reach the first reflective surface 110 or will be reflected by the first and/or second reflective surfaces 110, 120 onto elements other than the detection area 210, where they are absorbed. To this end, all surfaces of the optical system 100 except the first and second reflective surfaces 110, 120 are preferably blackened.

The color measurement device does not necessarily need to have full axial symmetry in the manner shown in Figs. 1 and 2. If lateral space is limited, it may be sufficient that the first and second reflective surfaces extend only over a limited range of azimuthal angles, for instance, over 180° (half-ring) or over two opposing sectors of, say, 90° each (two quarter ring sectors).

### Second embodiment

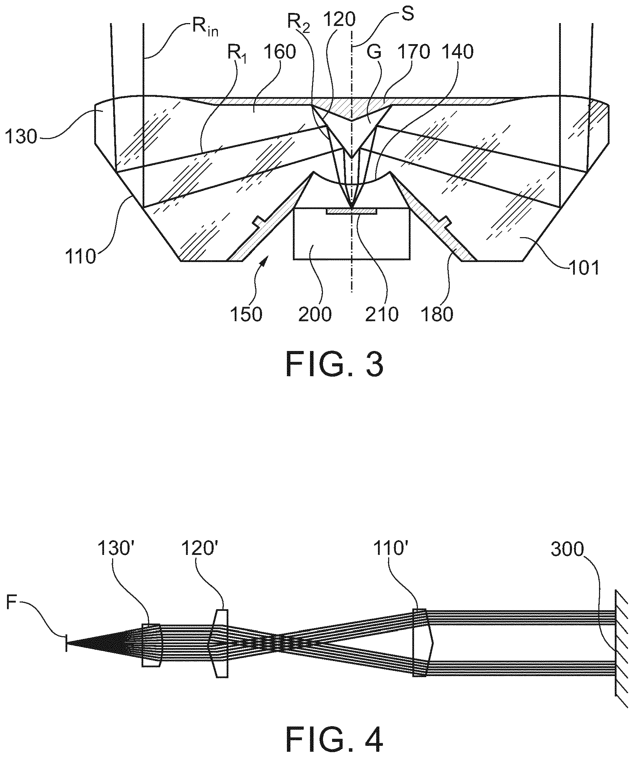

Fig. 3 illustrates a color measurement device according to a second embodiment. As in the first embodiment, the color measurement device comprises a light detector 200 and an optical system 100. In contrast to the first embodiment, reflections in the optical system are caused by total internal reflection (TIR) rather than external reflections.

To this end, the optical system 100 comprises an optical body 101 made of a transparent plastics material, e.g., PMMA or polycarbonate. The optical body 101 is axially symmetric about the system axis S. It comprises an annular entrance surface 130 for allowing light to enter the optical body, and a circular exit surface 140 that faces away from the entrance surface 130 and is centrally intersected by the system axis S. The optical body 101 further comprises a first reflective surface 110 configured to cause incident light rays Rᵢₙ that have entered the optical body through the entrance surface 130 along an incident direction parallel to the system axis S to be internally reflected into once-reflected light rays R₁ having a first direction of reflection with a component that is directed radially inwards towards the system axis. The optical body 101 further comprises a second reflective surface 120 configured to cause the once-reflected light rays R₁ to be internally reflected into twice-reflected light rays R₂ having a second direction of reflection, the second direction of reflection being directed towards the exit surface 140. The optical body 101 thus forms back-surface mirrors at the first and second reflective surfaces 110, 120.

Similarly to the first embodiment, the first reflective surface 110 is inclined relative to a plane perpendicular to the system axis S and axially symmetric with respect to the system axis S. It is shaped like an annular portion of a lateral surface of a right circular first cone having a first cone axis that coincides with the system axis S.

Also the second reflective surface 120 is inclined relative to a plane perpendicular to the system axis S and axially symmetric with respect to the system axis S. It is shaped like a right circular second cone having a second cone axis that coincides with the system axis. In any sectional plane that contains the system axis S, the first and second reflective surfaces are straight and parallel.

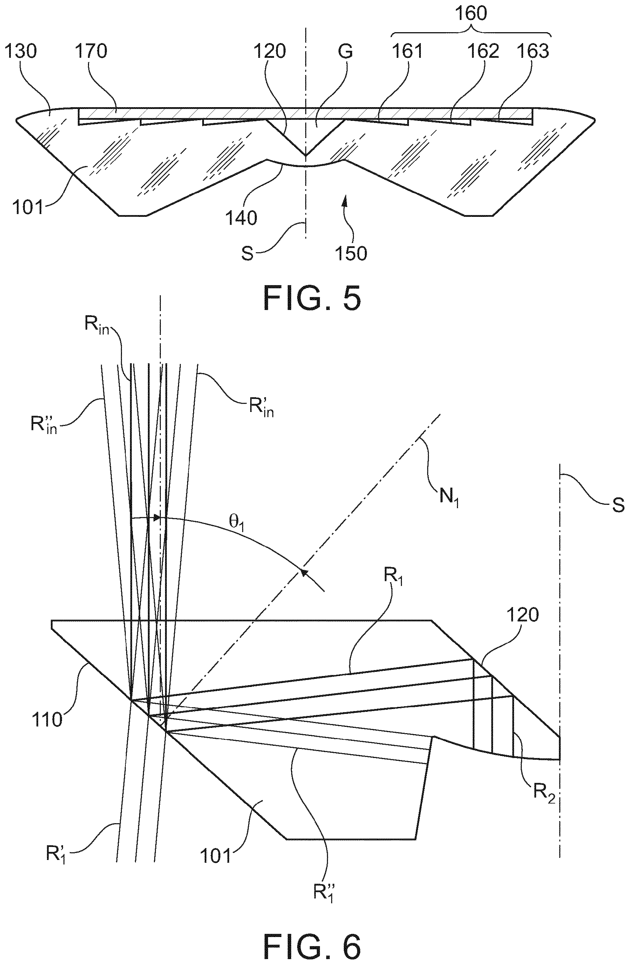

The inclination angles of the first and second reflective surfaces 110, 120 are chosen such that incident rays that are incident onto the first reflective surface 110 parallel to the system axis are reflected at the first reflective surface 110 by TIR, and that the once-reflected rays are reflected at the second reflective surface 120 by TIR. This will be explained in more detail below with reference to Fig. 6.

The entrance surface 130 is convexly curved. Thereby the entrance surface acts as a converging entrance lens for the incident rays Rᵢₙ. Also the exit surface 140 is convexly curved, whereby the exit surface 140 acts as a converging exit lens for the twice-reflected rays R₂. In this manner, light rays that were parallel before entering the optical body are focused towards the light detector 200.

In a portion of the optical body 101 that faces away from the entrance surface 130, a recess 150 is formed. The recess 150 is partially delimited by the exit surface 140. The light detector 200 is completely received in the recess 150, i.e., it does not project from the recess 150 along the system axis S.

The optical body 101 has a front surface 160 arranged radially between the entrance surface 130 and the system axis S and facing in the same direction as the entrance surface 130. In order to protect the front surface from dirt and to prevent light from entering the optical body 101 through the front surface 160, a protective cap 170 covers the front surface 160. The protective cap 170 also protects second reflective surface 120. In order to ensure that TIR can occur at the second reflective surface 120, an air gap G is present between the protective cap 170 and the second reflective surface 120.

A further protective element 180 having conical shape is arranged in the recess 150, covering all surfaces of the recess 150 except the exit surface 140.

### Explanation of optical path

The optical body 101 acts as a double-reflective, double refractive axicon element. This will be explained with reference to Fig. 4, which shows an illustration of an optical system that is not in accordance with the present invention.

The system of Fig. 4 comprises two refractive axicon lenses 110', 120'. A collimated, ring-shaped light beam that originates from an annular measurement area 300 is refracted by the first axicon lens 110'. The once-refracted beam still has a ring-shaped cross-section, however, with a diameter that linearly varies with the distance from the first axicon lens 110'. The once-refracted beam is then refracted a second time by the second axicon lens 120'. The axial positions and the geometries of the first and second axicon lenses 110', 120' are chosen such that the twice-refracted beam is collimated and cylindrical. The cylindrical twice-refracted beam is then refracted by a converging lens 130' into a converging beam that is focused onto a focal plane F.

The optical system of the second embodiment can be considered a folded and highly integrated version of the double-axicon system of Fig. 4. In the optical system of the second embodiment, the refractive axicon lenses 110', 120' are replaced by the conical reflective surfaces 110, 120 in order to fold the optical path while keeping the characteristic properties of an axicon, thereby reducing the system thickness. The reflective surfaces 110, 120 are surfaces of a single injection-molded optical body, at which total internal reflection takes place. The optical body may therefore be considered a "double-reflective axicon element". The optical body is further provided with curved entrance and exit surfaces 130, 140 to achieve focusing, replacing the converging lens 130'. The optical body is therefore not only doubly reflective, but also doubly refractive. Thereby, all the functions of the double-axicon system of Fig. 4 are achieved by a single injection-molded plastic part, while at the same time achieving a remarkable reduction in system thickness.

### Third embodiment

An optical body 101 for use in a color measurement device according to a third embodiment is illustrated in Fig. 5. The optical body 101 of the third embodiment is very similar to the optical body of the second embodiment, with the following difference: The front surface 160 is not flat, as in the second embodiment. Instead, it comprises at least three concentrically arranged, ring-shaped inclined surface portions 161, 162, 163. Each of inclined surface portions 161, 162, 163 is inclined outwards relative to a plane that is perpendicular to the system axis S by an angle of approximately 5°. The inclined surface portions 161, 162, 163 are axially staggered in a manner similar to a Fresnel lens.

By causing the front surface 160 to be inclined, the likelihood is reduced that stray light that might internally hit the front surface 160 will reach the light detector.

### Geometric considerations

Figure 6 illustrates geometric considerations for an optical body 101 of the type illustrated in Figs. 3 and 5. This figure is not to scale, as it is meant to illustrate certain principles only.

Specifically, Figure 6 illustrates what happens with incident light rays that enter the optical body at angles larger than the acceptance angle of the optical system. The first reflective surface 110 has a surface normal N₁, which is inclined to the system axis S by an angle θ₁ that is larger than the critical angle of the material from which the optical body is made by an amount that corresponds to the desired acceptance angle. Accordingly, rays Rᵢₙ that are incident onto the first reflective surface 110 parallel to the system axis S are properly reflected as once-reflected rays R₁ to the second reflective surface 120 by TIR, as their angle of incidence onto the first reflective surface 110 is larger than the critical angle. However, incident rays Rᵢₙ' that have an angle to the system axis S that is larger than the acceptance angle and whose direction has a component radially outward will be transmitted at the first reflective surface as transmitted rays R₁' because their angle of incidence onto the first reflective surface 110 is smaller than the critical angle. On the other hand, incident rays Rᵢₙ" that have an angle to the system axis S that is larger than the acceptance angle and whose direction has a component radially inward will be reflected at the first reflective surface into once-reflected rays R₁". These rays hit a surface that delimits the recess 150, where they leave the optical body. The geometry of the optical body in a region radially inside the first reflective surface determines which once-reflected rays are accepted and which ones are rejected.

Accordingly, the acceptance angle of the optical system is determined, on the one hand, by the inclination of the first reflective surface (which determines at which angles relative to the system axis TIR is possible) and, on the other hand, by the geometry of the optical body in a region radially inside the first reflective surface.

A numerical example is provided as follows: If the optical body 101 is made of polycarbonate, the critical angle is 39° in the visible spectrum. Accordingly, light rays that are incident on the first reflective surface 110 at angles of incidence above 39° will be reflected at the first reflective surface 110 by TIR. The first reflective surface 110 may have a surface normal N₁ whose angle of inclination relative to the system axis S is θ₁ = 42°. Then light rays whose direction has a component radially outward will be reflected at the first reflective surface by TIR only if they have an angle to the system axis S of not more than 3°.

These considerations show that TIR at the first reflective surface not only acts to cause reflection of desired incident rays, but also acts at as an angular filter to exclude undesired incident rays.

Another advantageous effect of TIR is that polarization is transformed by two TIRs from linear to circular or elliptical. In other words, a mixture of polarization states results. This renders the color measurement device less sensitive to changes in sensor orientation.

### Fourth embodiment

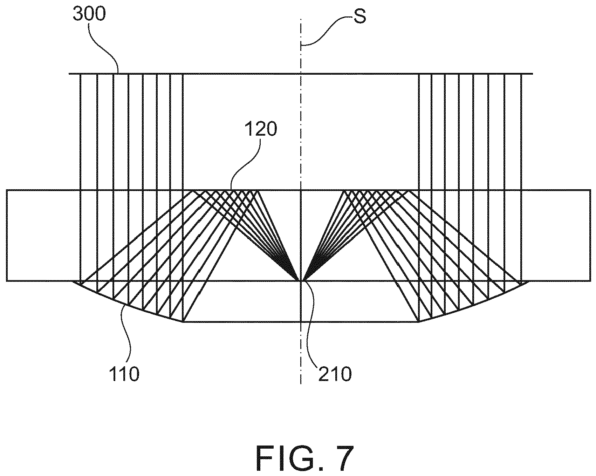

Figure 7 illustrates, in a highly schematic manner, an optical path for a color measurement device according to a fourth embodiment. In contrast to the first to third embodiments, in this embodiment the second reflective surface 120 is flat, extending in a plane perpendicular to the system axis S.

For realizing this optical path, the optical system may be configured such that reflections at the first and second reflective surfaces 210, 220 are external reflections, as in the first embodiment, or internal reflections, as in the second and third embodiments. For given device dimensions, the angles of incidence onto the first and second reflective surfaces are necessarily much smaller in the fourth embodiment than in the second and third embodiments. Therefore TIR is difficult to realize. Accordingly, mirror coatings may be required to realize the first and second reflective surfaces in case internal reflections in a transparent optical body are to be used for realizing this optical path.

### Modifications

While the invention has been described with reference to preferred embodiments thereof, the scope of the invention is not limited to these embodiments, and many modifications are possible without leaving the scope of the invention as defined in the appended claims.

In particular, the dimensions of the optical system may be varied in a wide range. If an optical body is used, the optical body may be manufactured from a variety of transparent plastics materials, as they are well known for the manufacture of optical lenses. Instead of using TIR, mirror coatings may be applied to the optical body to form the first and second reflective surfaces as internal mirror surfaces. Any light detector may be used as long as the light detector is able to achieve spectral selectivity. For instance, instead of employing a sensor with pixels covered by color filters, the light detector may comprise a dispersive or diffractive element such as a dispersive prism or a diffraction grating and a sensor having a plurality of pixels arranged to receive light in different spectral bands from the dispersive or diffractive element. Many other modifications are possible.

## Claims

1. A color measurement device for determining color characteristics of a measurement area (300), the color measurement device comprising:
a spectrally selective light detector (200) defining a detection area (210); and
an optical system (100) for guiding light that has been emitted from the measurement area (300) to the detection area (210), the optical system (100) defining a system axis (S), the system axis (S) passing through the detection area (210), the optical system (100) comprising:
a first reflective surface (110) configured to cause incident light rays (Rᵢₙ) that have entered the optical system (100) along an incident direction parallel to the system axis (S) to be reflected into once-reflected light rays (R₁) having a first direction of reflection, the first direction of reflection having a component that is directed radially inwards towards the system axis (S), the first reflective surface (110) being inclined relative to a plane perpendicular to the system axis (S) and shaped like at least a portion of a first axially symmetric surface having rotational circular symmetry with respect to the system axis; and
a second reflective surface (120) configured to cause said once-reflected light rays (R₁) to be reflected into twice-reflected light rays (R₂).

2. The color measurement device of claim 1, wherein the first reflective surface (110) is shaped like a portion of a lateral surface of a right circular first cone having a first cone axis that coincides with the system axis (S).

3. The color measurement device of claim 1 or 2, wherein the first reflective surface (110) is curved in such a manner that a section of the first reflective surface with a sectional plane that contains the system axis (S) is curved, so as to cause focusing of parallel incident light rays (Rᵢₙ) towards the light detector (200).

4. The color measurement device of any one of the preceding claims, wherein the second reflective surface (120) is inclined relative to a plane perpendicular to the system axis (S) and shaped like at least a portion of a second axially symmetric surface having rotational circular symmetry with respect to the system axis.

5. The color measurement device of claim 4, wherein the second reflective surface (120) is shaped like a portion of a lateral surface of a right circular second cone having a second cone axis that coincides with the system axis.

6. The color measurement device of claim 4 or 5, wherein the second reflective surface (120) is curved in such a manner that a section of the second reflective surface with a sectional plane that contains the system axis (S) is curved.

7. The color measurement device of any one of the preceding claims, wherein the optical system (100) comprises or consists of a mirror element (111) having mirror surfaces that form the first and second reflective surfaces (110, 120), the mirror surfaces being configured to cause external reflections.

8. The color measurement device of any one of claims 1-6,
wherein the optical system (100) comprises or consists of an optical body (101) made of a transparent material,
wherein the first and second reflective surfaces (110, 120) are formed by surface portions of the optical body (101),
wherein the first reflective surface (110) is configured to cause reflection of the incident light rays by internal reflection, preferably by total internal reflection, and
wherein the second reflective surface (120) is configured to cause reflection of the once-reflected light rays by internal reflection, preferably by total internal reflection.

9. The color measurement device of claim 8,
wherein the first reflective surface (110) is shaped like a portion of a lateral surface of a right circular first cone having a first cone axis that coincides with the system axis, the first reflective surface (110) having first surface normals (N₁) that are inclined to the system axis (S) by a first inclination angle (θ₁),
wherein the second reflective surface (120) is shaped like a portion of a lateral surface of a right circular second cone having a second cone axis that coincides with the system axis, the second reflective surface (120) having second surface normals (N₂) that are inclined to the first direction of reflection by a second inclination angle (θ₂),
wherein each of the first and second inclination angles (θ₁, θ₂) is larger than a critical angle of total internal reflection between the optical body (101) and air, and
wherein the first and second reflective surfaces (110, 120) are preferably parallel.

10. The color measurement device of claim 8 or 9, wherein the optical body (101) has an entrance surface (130) for allowing the incident rays (Rᵢₙ) to enter the optical body (101), the entrance surface (130) being shaped like a ring or ring segment when viewed in a projection along the system axis (S), and an exit surface (140) for allowing the twice-reflected rays (R₂) to exit the optical body and to impinge onto the detection area (210) of the light detector (200), the exit surface (140) facing away from the entrance surface (130) and being intersected by the system axis (S).

11. The color measurement device of claim 10,
wherein the entrance surface (130) has positive optical lens power in such a manner that the entrance surface acts as a converging entrance lens for the incident rays (Rᵢₙ); and/or
wherein the exit surface (140) has positive optical lens power in such a manner that the exit surface (140) acts as a converging exit lens for the twice-reflected rays (R₂).

12. The color measurement device of claim 10 or 11,
wherein the optical body (101) has a recess (150) that is partially delimited by the exit surface (140), the recess (150) being formed in a portion of the optical body (101) that faces away from the entrance surface (130), and
wherein the light detector (200) is received in the recess (150).

13. The color measurement device of any one of claims 10-12,
wherein the optical body (101) has a front surface (160) arranged radially between the entrance surface (130) and the system axis (S) and facing substantially in the same direction as the entrance surface (130), and
wherein the front surface (160) comprises at least one inclined surface portion (161, 162, 163), the at least one inclined surface portion (161, 162, 163) being inclined relative to a plane that is perpendicular to the system axis (S), the at least one inclined portion preferably being inclined by 2° to 10° relative to the plane that is perpendicular to the center axis of the optical body, and/or
wherein the color measurement device further comprises a protective cap (170), the protective cap (170) covering said front surface (160) and the second reflective surface (120), wherein an air gap (G) is preferably present between the protective cap (170) and the second reflective surface (120).

14. An optical body (101) made of a transparent material, the optical body (101) defining a system axis (S), the optical body (101) comprising:
an entrance surface (130) for allowing light to enter the optical body (101);
an exit surface (140) facing away from the entrance surface (130) and being intersected by the system axis (S);
a first reflective surface (110) configured to cause incident light rays (Rᵢₙ) that have entered the optical body (101) through the entrance surface (130) along an incident direction parallel to the system axis (S) to be internally reflected into once-reflected light rays (R₁) having a first direction of reflection, the first direction of reflection having a component that is directed radially inwards towards the system axis (S); and
a second reflective surface (120) configured to cause said once-reflected light rays (R₁) to be internally reflected into twice-reflected light rays (R₂) having a second direction of reflection, the second direction of reflection being directed towards the exit surface (140),
wherein the first reflective surface (110) is inclined relative to a plane perpendicular to the system axis (S) and shaped like at least a portion of an axially symmetric surface having rotational circular symmetry with respect to the system axis .

15. The optical body of claim 14,
wherein the first reflective surface (110) is shaped like a portion of a lateral surface of a right circular first cone having a first cone axis that coincides with the system axis, the first reflective surface (110) having first surface normals (N₁) that are inclined to the system axis (S) by a constant first inclination angle (θ₁),
wherein the second reflective surface (120) is shaped like a portion of a lateral surface of a right circular second cone having a second cone axis that coincides with the system axis, the second reflective surface (120) having second surface normals (N₂) that are inclined to the first direction of reflection by a constant second inclination angle (θ₂),
wherein each of the first and second inclination angles (θ₁, θ₂) is larger than a critical angle of total internal reflection between the optical body (101) and air in at least a portion of a wavelength range between 380 nm and 700 nm, and
wherein the first and second reflective surfaces (110, 120) are preferably parallel.
